# EUROPEAN PATENT SPECIFICATION

(11) **EP 0 800 058 B1**
(45) Date of publication and mention of the grant of the patent: **19.03.2003**
(21) Application number: 97105464.8
(22) Date of filing: 02.04.1997
(51) Int. Cl.: G01C 19/56

(54) **Vibrating gyroscope**
Vibrationskreisel
Gyroscope à vibration

(30) Priority: 02.04.1996 JP 8016596
(43) Date of publication of application: 08.10.1997
(73) Proprietor: MURATA MANUFACTURING CO., LTD., Nagaokakyo-shi Kyoto-fu 226 (JP)
(72) Inventor: Ishitoko, Nobuyuki, Nagaokakyo-shi, Kyoto-fu (JP); Fujimoto, Katsumi, Nagaokakyo-shi, Kyoto-fu (JP); Nishiyama, Hiroshi, Nagaokakyo-shi, Kyoto-fu (JP)
(74) Representative: Schoppe, Fritz, Dipl.-Ing.

(56) References cited:
- EP-A- 0 684 450
- EP-A- 0 685 704
- PATENT ABSTRACTS OF JAPAN vol. 095, no. 008, 29 September 1995 -& JP 07 131280 A (TOYOTA MOTOR CORP;OTHERS: 01), 19 May 1995

## Description

### BACKGROUND OF THE INVENTION

### 1. Field of the Invention

The present invention relates generally to vibrating gyroscopes. More particularly, the invention is concerned with a vibrating gyroscope for use in a navigation system which locates a mobile unit by detecting, for example, a rotational angular velocity, so as to perform a suitable navigational operation, or for use in a vibration-isolating system, such as a shake-preventing device, which detects a rotational angular velocity caused by external vibrations, such as shaking by hand, to suitably isolate vibrations.

### 2. Description of the Related Art

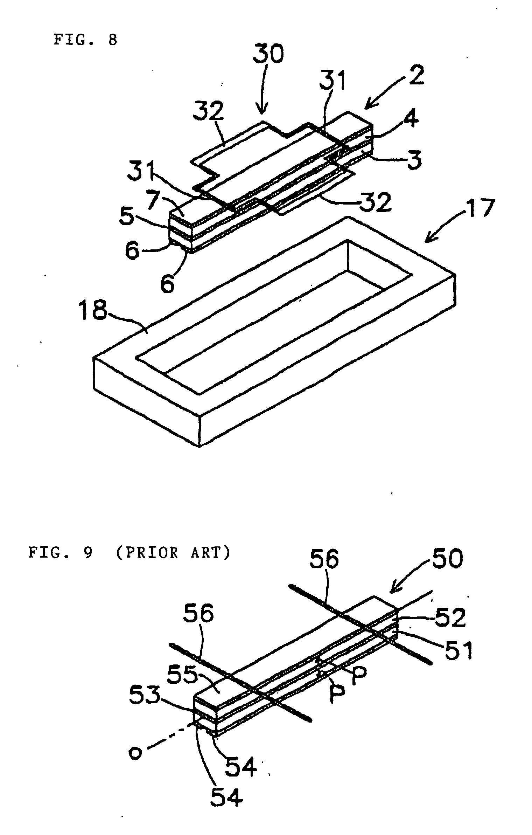

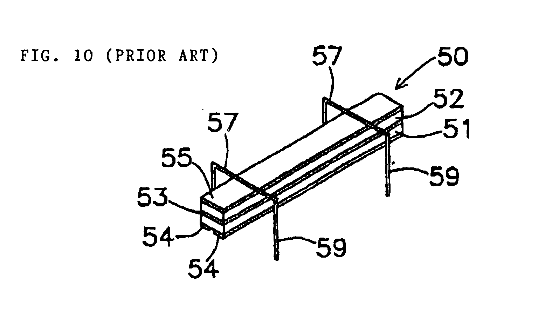

The construction of a known type of vibrating gyroscope will now be explained with reference to Figs. 9 and 10.

Referring to Fig. 9, a conventional gyroscope has a vibrator 50. The vibrator 50 is formed by, for example, laminating and bonding a first piezoelectric substrate 51 and a second piezoelectric substrate 52, both formed in a strip-like shape, across a dummy electrode 53. The first and second piezoelectric substrates 51 and 52 are polarized along their thickness dimensions in opposite directions as indicated by the arrows P in Fig. 9. Alternatively, they may be polarized in different directions opposedly facing each other. Two divided electrodes 54, 54 are formed on the main surface of the first piezoelectric substrate 51 with a spacing in the widthwise direction of the substrate 51, while a common electrode 55 is formed on the main surface of the second piezoelectric substrate 52.

As described above, the first and second piezoelectric substrates 51 and 52 of the vibrator 50 are polarized in opposite directions. Thus, upon application of a drive signal, for example, a sine-wave signal, between each of the divided electrodes 54, 54 and the common electrode 55, the first and second piezoelectric substrates 51 and 52 are vibrated in a bending manner in directions orthogonal to the main surfaces of the substrates 51 and 52 by using a portion further inward from both ends of the longitudinal substrates 51 and 52 as a node. It should be noted that the directions of vibration of the first and second piezoelectric substrates 51 and 52 are opposite to each other. Then, the vibrating gyroscope is rotated about the center axis O of the vibrator 50 to generate a rotational angular velocity, so that a Coriolis force acts upon the vibrator 50 in response to the angular velocity. Due to this Coriolis force, the vibrator 50 changes its direction of vibration so as to generate a signal between the divided electrodes 54, 54 in accordance with the angular velocity. The rotational angular velocity can thus be detected based on this signal.

Two wire rods 56, 56 serving as support members are attached to the vicinity of the node of the vibrator 50. The wire rods 56, 56, which are formed by molding metal linearly, are soldered onto the common electrode 55 in the direction orthogonal to the longitudinal direction of the vibrator 50. Both ends of each of the rods 56, 56 are fixed to, for example, a frame, though it is not shown, so that the vibrator 50 can be supported in a hollow in the frame.

Alternatively, wire rods 57, 57 illustrated in Fig. 10 may be used as the support members. The wire rods 57, 57, bent in a "U" shape, are fixed by soldering their central portions onto the common electrode 55 and by further inserting both ends into holes formed in a substrate (not shown). Accordingly, the vibrator 50 can be supported while floating above the substrate.

However, the following problems are encountered by the above known type of gyroscope. More specifically, the wire rods 56, 56 attached to the vibrator 50 are linearly formed and are also fixed at both ends to a frame. In this arrangement, vibrations of the vibrator 50 in the direction orthogonal to the longitudinal direction of the vibrator 50 (i.e., in the longitudinal direction of the wire rods 56, 56) may be suppressed, thereby disadvantageously lowering the temperature characteristics and sensitivity of the vibrating gyroscope. Moreover, the use of the wire rods 57, 57 attached to the vibrator 50 can contain restrictions imposed upon vibrations of the vibrator 50 to a minimal level because the rods 57, 57 are formed in a bending shape. On the other hand, legs 59 of the wire rods 57, 57 should require a certain length to ensure support of the vibrator 50 floating above a substrate. This disadvantageously increases the height of the overall gyroscope, thereby hampering the downsizing of the gyroscope.

PATENT ABSTRACTS of Japan vol. 018, no. 505 (P-1803), 21 September 1994 & JP 06 174474 A (MURATA MFG CO LTD), 24 June 1994 and PATENT ABSTRACTS OF JAPAN vol. 095, no. 011, 26 Dezember 1995 & JP 07 208997 A (FUJITSU TEN LTD), 11 August 1995 disclose vibrating gyroscopes having a vibrator containing a triangle columnar vibrating body with piezoelectric elements formed on the three side faces support members having essentially new-shaped bent support lacks. The support members are attached to the vibrating body on the ridge-line of the triangle columnar vibrating body near the node points of the body.

It is the object underlying the invention to provide a low-height vibrating gyroscope in which vibrations of the vibrator are not restricted.

This object is achieved by vibrating gyroscopes as defined in claims 1 and 2.

Since the support member of the vibrator is provided with bent portions, the support member can be deformed in accordance with vibrations of the vibrator in a direction orthogonal to the longitudinal direction of the vibrator, which would otherwise suppress vibrations. As a consequence, improvements can be made in the temperature characteristics and sensitivity of the vibrating gyroscope. Further, since the support member is bent in a direction other than the direction along the height of the vibrator, the overall gyroscope can be decreased in height, thereby increasing flexibility in designing the gyroscope.

Other features and advantages of the present invention will become apparent from the following description of the invention which refers to the accompanying drawings.

### BRIEF DESCRIPTION OF THE DRAWINGS

Fig. 1 illustrates a vibrating gyroscope according to a first embodiment of the present invention;
Fig. 2 is an exploded perspective view of a vibrator, wire rods and a frame for use in the gyroscope shown in Fig. 1;
Fig. 3 is a top view of the vibrator shown in Fig. 2:
Fig. 3A illustrates a state in which the vibrator is not vibrated, while Figs. 3B and 3C illustrate a state in which the vibrator vibrates in a direction orthogonal to the longitudinal direction of the vibrator;
Fig. 4 is a top view illustrating a wire rod for use in a vibrating gyroscope according to an example of modifications to the first embodiment of the present invention;
Fig. 5 is a top view illustrating a wire rod for use in a vibrating gyroscope according to another example of modifications to the first embodiment of the present invention;
Fig. 6 is a perspective view illustrating the essential portion of a vibrator and a wire rod for use in a vibrating gyroscope according to still another example of modifications to the first embodiment of the present invention;
Fig. 7 is a perspective view illustrating the essential portion of a vibrator and a wire rod for use in a vibrating gyroscope according to a further example of modifications to the first embodiment of the present invention;
Fig. 8 is an exploded perspective view illustrating a vibrator, a wire rod and a frame for use in a vibrating gyroscope according to a second embodiment of the present invention;
Fig. 9 is a perspective view of a vibrator and wire rods for use in a known type of vibrating gyroscope; and
Fig. 10 is a perspective view of a vibrator and wire rods for use in another known type of vibrating gyroscope.

### DESCRIPTION OF THE PREFERRED EMBODIMENTS

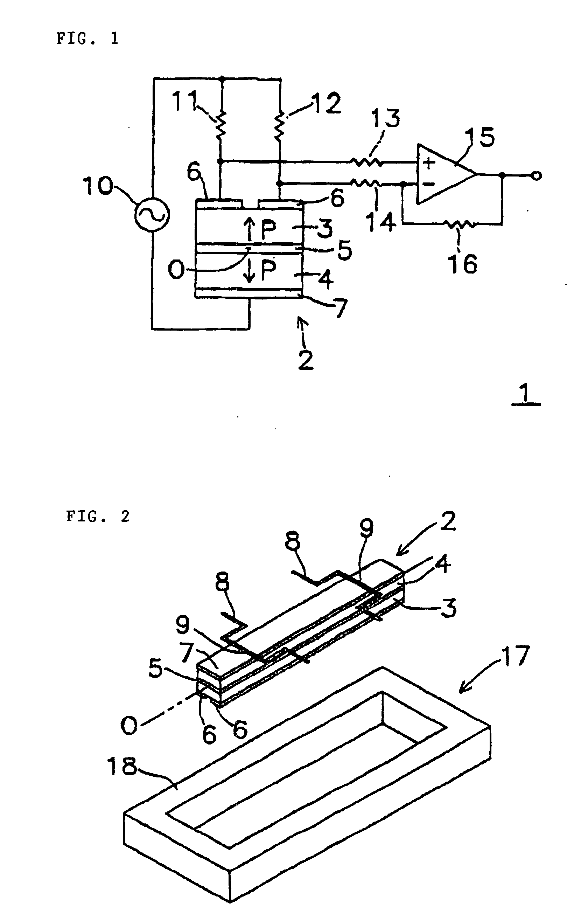

A description will now be given of the construction of a vibrating gyroscope according to a first embodiment of the present invention while referring to Figs. 1 through 3.

A reference will first be made to Fig. 1. A gyroscope 1 has a vibrator generally indicated by 2. The vibrator 2 is formed by laminating a first piezoelectric substrate 3 and a second piezoelectric substrate 4, both formed in a strip-like shape, across a dummy electrode 5 and by further bonding the substrates 3 and 4 by means such as an adhesive. The first and second piezoelectric substrates 3 and 4 are polarized along their thickness dimensions in opposite directions, as indicated by the arrows P in Fig. 1. Alternatively, the first and second substrates 3 and 4 may be polarized in directions opposedly facing each other. Also, two divided electrodes 6, 6 are formed on the main surface of the first piezoelectric substrate 3 with a spacing in the widthwise direction of the substrate 3, while a common electrode 7 is disposed on the main surface of the second piezoelectric substrate 4. Further, an oscillation circuit 10 serving as drive means is connected at one output terminal to the divided electrodes 6, 6 through resistors 11 and 12, respectively, and at the other output terminal to the common electrode 7 of the vibrator 2. Additionally, the divided electrodes 6, 6 are respectively coupled through resistors 13 and 14 to the non-inverting input terminal and the inverting input terminal of a differential amplifying circuit 15 used as detection means. A resistor 16 is connected between the output terminal and the inverting input terminal of the differential amplifying circuit 15.

In the gyroscope 1 constructed as described above, drive signals, such as sine-wave signals, output from the oscillation circuit 10 are applied to the divided electrodes 6, 6 of the vibrator 2 via the resistors 11 and 12, respectively, so that the first and second piezoelectric substrates 3 and 4 are vibrated in a bending manner in a direction orthogonal to the main surfaces of the substrates 3 and 4. Then, the gyroscope 1 is rotated about the center axis O of the vibrator 2 to generate a rotational angular velocity, so that a Coriolis force acts upon the vibrator 2 in accordance with the angular velocity in the direction parallel to the main surfaces of the first and second substrates 3 and 4 and also in the direction orthogonal to the center axis O of the vibrator 2. Due to this Coriolis force, the vibrator 2 changes its direction of vibration so as to generate a signal between the divided electrodes 6, 6 in response to the angular velocity. The signal produced between the divided electrodes 6, 6 is detected by the differential amplifying circuit 15 through the resistors 13 and 14, and the rotational angular velocity can thus be detected based on a signal output from the differential amplifying circuit 15.

The vibrator 2 is supported, as shown in Fig. 2, by two wire rods 8, 8 serving as support members. The wire rods 8, 8, formed of metal, are provided with "U"-shaped bent portions 9, 9 projecting in directions parallel to the main surface of the second piezoelectric substrate 4. The bent portions 9, 9 are attached to the vicinity of the node on the common electrode 7 of the vibrator 2 by means such as soldering. Both ends of the wire rods 8, 8 are fixed onto the top surface 18 of a frame 17 by means such as soldering, and thus, the vibrator 2 can be supported in a hollow in the frame 17. In this state, the top surfaces of both the vibrator 2 and the frame 17 are located in the same plane.

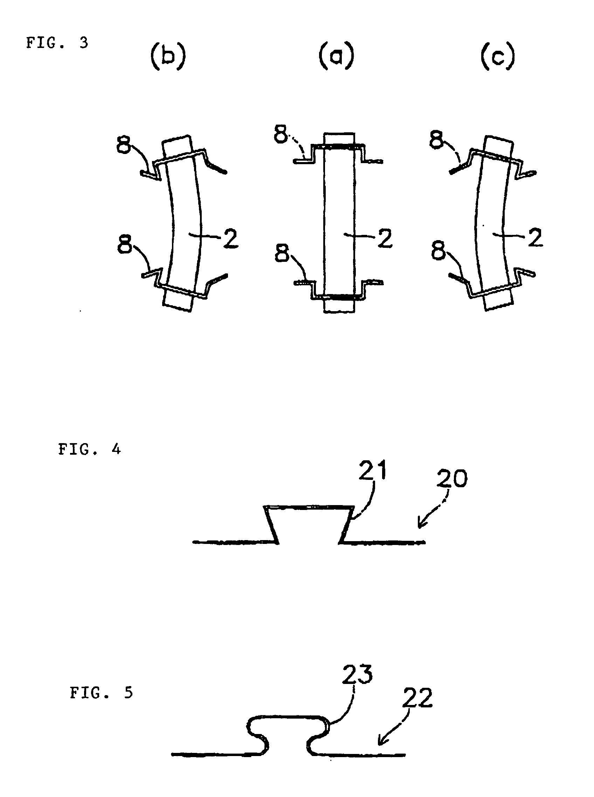

In this manner, since the wire rods 8, 8 are provided with the bent portions 9, 9, they can elastically support the vibrator 2. More specifically, the wire rods 8, 8 are deformed, as illustrated in Figs. 3A and 3C, in response to vibrations of the vibrator 2 in the direction orthogonal to the longitudinal direction (longitudinal direction of the wire rods 8, 8) of the vibrator 2, which would otherwise restrict vibrations. As a result, the temperature characteristics and sensitivity of the vibrating gyroscope 1 can be enhanced. Further, since the wire rods 8, 8 are not bent along the height of the vibrator 2, the overall vibrating gyroscope 1 can be decreased in height, thereby increasing flexibility in designing the gyroscope 1. Additionally, since the vibrator 2 and the frame 17 are located in the same plane, solder can adhere to a plurality of portions of the vibrator 2 and the frame 17 at one time, thereby improving performance of the soldering operation. This further makes it possible to easily introduce an automatic machine in the assembly process.

The aforedescribed embodiment has been explained in which the wire rods 8, 8 are provided with the "U"-shaped bent portions 9, 9 as the support members. However, this is not exclusive, and the shape of the bent portions 9, 9 may be modified, such as a wire rod 20, as shown in Fig. 4, with an acute-angled bent portion 21, or a wire rod 22, as illustrated in Fig. 5, with a generally arch-like bent portion 23. In this case, advantages similar to those exhibited by the first embodiment can be offered.

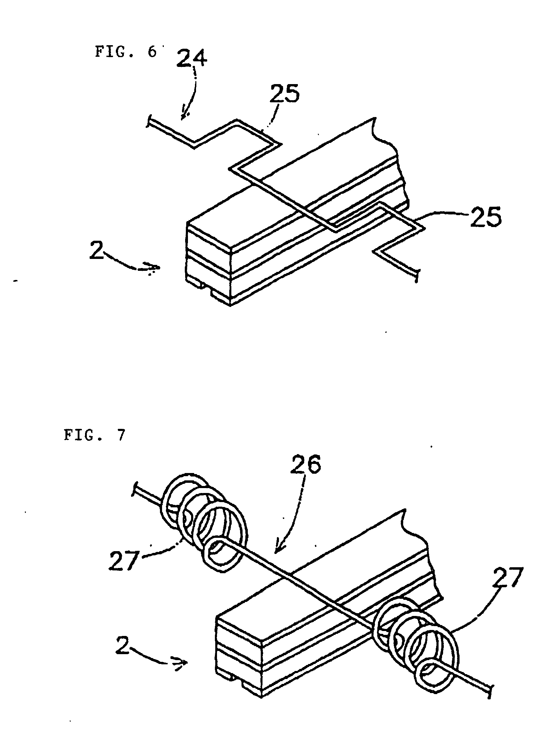

Alternatively, two "U"-shaped bent portions 25, 25 may be provided, as shown in Fig. 6, for a wire rod 24, in which case, the wire rod 24 functions by bonding the intermediate points of the bent portions 25, 25 to the common electrode 7 of the vibrator 2. In this arrangement in which the two bent portions 25, 25 are disposed across the vibrator 2, the wire rod 24 can be deformed more faithfully in response to the vibrations of the vibrator 2 as compared with a wire rod having only a single bent portion. Hence, it can be more highly expected that the temperature characteristics and sensitivity of the vibrating gyroscope will be enhanced. The two bent portions 25, 25 provided for the wire rod 24 are not restricted to the "U" shape, but may be formed in other shapes, such as acute-angled portions or curved portions. Alternatively, coil-shaped bent portions 27, 27 may be provided, such as in a wire rod 26 shown in Fig. 7. Further, the shapes of bent portions may be different between one wire rod and the other.

Moreover, although in the first embodiment the bent portions provided for the wire rods project in directions in parallel to the main surface of the piezoelectric substrate for use in the vibrator, the bent portions may project in any direction. Additionally, the directions in which the two bent portions project may be different from each other between one wire rod and the other.

An explanation will now be given with reference to Fig. 8 of the construction of a vibrating gyroscope according to a second embodiment of the present invention. Elements identical or similar to those shown in Figs. 1 and 2 are designated by like reference numerals, and an explanation thereof will thus be omitted.

The vibrating gyroscope of this embodiment has a vibrator 2, which is supported by a wire rod 30 acting as a support member. The wire rod 30, produced by molding metal, is formed by integrating two "U"-shaped bent portions 31, 31 and two interconnecting portions 32, 32 for interconnecting these bent portions 31, 31. The bent portions 31, 31 project in directions parallel to the main surface of the second piezoelectric substrate 4 for use in the vibrator 2. Then, the intermediate sections of the respective bent portions 31, 31 are secured to the common electrode 7 of the vibrator 2 by means such as soldering. Further, the interconnecting portions 32, 32 are fixed on the top surface 18 of the frame 17 by means such as soldering. Accordingly, the vibrator 2 can be supported in a hollow in the frame 17. In this state, the top surfaces of the vibrator 2 and the frame 17 are located in the same plane.

In the gyroscope constructed as described above, since the wire rod 30 has the bent portions 31, 31, the rod 30 can be deformed in accordance with vibrations of the vibrator 2 in a manner similar to the first embodiment, which would otherwise suppress the vibrations. As a consequence, the temperature characteristics and sensitivity of the gyroscope can be improved. Moreover, since the wire rod 30 is not bent along the height of the vibrator 2, the overall vibrating gyroscope can be decreased in height, thereby increasing flexibility in designing the gyroscope. Additionally, the vibrator 2 and the frame 17 are placed in the same plane, improving performance of the soldering operation. This makes it possible to readily introduce an automatic machine in the assembly process.

In the above embodiment, the "U"-shaped bent portions are provided for the wire rod. This is not, however, exclusive, and acute-angled bent portions or generally arch-like bent portions may be formed. In this case, advantages similar to those offered by the second embodiment may be presented. Additionally, bent portions formed in different shapes may be provided for a single wire rod.

Further, although in the second embodiment the bent portions of the wire rod project in directions parallel to the main surface of the piezoelectric substrate for use in the vibrator, they may project in any direction. Additionally, the two bent portions may project in opposite directions.

Hence, the vibrating gyroscope of the present invention offers the following advantages. The bent portions, which are provided for the support member of the vibrator, can be deformed in response to vibrations of the vibrator in a direction orthogonal to the longitudinal direction of the vibrator, which would otherwise suppress the vibrations of the vibrator. As a result, improvements can be made in the temperature characteristics and sensitivity of the vibrating gyroscope. Additionally, since the support member is bent in a direction other than the direction along the height of the vibrator, the overall gyroscope can be decreased in height. This further increases flexibility in designing the gyroscope.
Although the present invention has been described in relation to particular embodiments thereof, many other variations and modifications and other uses will become apparent to those skilled in the art. It is preferred, therefore, that the present invention be limited not by the specific disclosure herein, but only by the appended claims.

## Claims

1. A vibrating gyroscope (1) comprising:
a vibrator (2) including a first piezoelectric substrate (3) polarized in the thickness direction of said substrate, a second piezoelectric substrate (4) laminated on said first piezoelectric substrate (3) and polarized in a direction opposite to the direction in which said first piezoelectric substrate (3) is polarized, two divided electrodes (6) formed on the main surface of said first piezoelectric substrate (3), and a common electrode (7) formed on the main surface of said second piezoelectric substrate (4); and
support means (30) for supporting said vibrator (2), said support means (30) including at least a first support member having a first portion which is attached to said common electrode (7) and a second support member having a first portion which is attached to said common electrode (7),
**characterized in that**
said first support member includes a second portion extending from said first portion and having at least one bent portion;
said second support member includes a second portion which is bent and extends from said first portion; and
said support means (30) further comprises interconnecting portions (32) interconnecting the respective second portions of said first and second support members.

2. A vibrating gyroscope (1) comprising:
a frame (17);
a vibrator (2) disposed within said frame (17), said vibrator (2) including a first piezoelectric substrate (3) polarized in the thickness direction of said substrate (3), a second piezoelectric substrate (4) laminated on said first piezoelectric substrate (4) and polarized in a direction opposite to the direction in which said first piezoelectric substrate (3) is polarized, two divided electrodes (6) formed on the main surface of said first piezoelectric substrate (3), and a common electrode (7) formed on the main surface of said second piezoelectric substrate (4), said vibrator (2) being disposed within said frame (17) such that said common electrode (7) is essentially parallel with respective outwardly facing surfaces of opposite side of said frame (17); and
first and second support pins (8; 20; 22; 24; 26; 30) for supporting said vibrator, each of said first and second support pins (8; 20; 22; 24; 26; 30) being disposed essentially parallel to said common electrode (7) and each having respective first portions connected to said common electrode (7) and respective second bent portions extending in opposite directions from said first portion and connected to respective ones of said opposite sides of said frame (17).

3. A vibrating gyroscope (1) according to claim 2, wherein said support means (8; 20; 22; 24; 26) comprises two support members, each of which is in the form of an individual wire rod comprised of said first and second portions.

4. A vibrating gyroscope (1) according to claim 2, wherein said bent portion of each second portion forms a substantially right angle bend.

5. A vibrating gyroscope (1) according to claim 2, where said bent portion of each second portion essentially forms an acute angle bend.

6. A vibrating gyroscope (1) according to claim 2, wherein said bent portion essentially forms a curved bend.

7. A vibrating gyroscope (1) according to claim 2, wherein said second portions are each provided with a plurality of bent portions, each of which forms a substantially right angle bend.

8. A vibrating gyroscope (1) according to claim 2, wherein said second portions are bent in a coil-like shape.

## Patentansprüche

1. Ein Vibrationsgyroskop (1), das folgende Merkmale umfaßt:
einen Vibrator (2), der ein erstes piezoelektrisches Substrat (3), das in der Dickerichtung des Substrats polarisiert ist, ein zweites piezoelektrisches Substrat (4), das auf das erste piezoelektrische Substrat (3) laminiert ist und in einer Richtung entgegengesetzt zu der Richtung polarisiert ist, in der das erste piezoelektrische Substrat (3) polarisiert ist, zwei geteilte Elektroden (6), die auf der Hauptoberfläche des ersten piezoelektrischen Substrats (3) gebildet sind, und eine gemeinsame Elektrode (7) umfaßt, die auf der Hauptoberfläche des zweiten piezoelektrischen Substrats (4) gebildet ist; und
eine Trageeinrichtung (30) zum Tragen des Vibrators (2), wobei die Trageeinrichtung (30) zumindest ein erstes Tragebauglied mit einem ersten Abschnitt, der an der gemeinsamen Elektrode (7) befestigt ist, und ein zweites Tragebauglied mit einem ersten Abschnitt, der an der gemeinsamen Elektrode (7) befestigt ist, umfaßt,
**dadurch gekennzeichnet, daß**
das erste Tragebauglied einen zweiten Abschnitt umfaßt, der sich von dem ersten Abschnitt erstreckt und zumindest einen gebogenen Abschnitt aufweist;
das zweite Tragebauglied einen zweiten Abschnitt umfaßt, der gebogen ist, und sich von dem ersten Abschnitt erstreckt; und
die Trageeinrichtung (30) ferner Verbindungsabschnitte (32) umfaßt, die die jeweiligen zweiten Abschnitte des ersten und des zweiten Tragebauglieds miteinander verbinden.

2. Ein Vibrationsgyroskop (1), das folgende Merkmale umfaßt:
einen Rahmen (17);
einen Vibrator (2), der in dem Rahmen (17) angeordnet ist, wobei der Vibrator (2) ein erstes piezoelektrisches Substrat (3), das in der Dickerichtung des Substrats (3) polarisiert ist, ein zweites piezoelektrisches Substrat (4), das auf das erste piezoelektrische Substrat (4) laminiert ist und in einer Richtung entgegengesetzt zu der Richtung polarisiert ist, in der das erste piezoelektrische Substrat (3) polarisiert ist, zwei geteilte Elektroden (6), die auf der Hauptoberfläche des ersten piezoelektrischen Substrats (3) gebildet sind, und eine gemeinsame Elektrode (7) umfaßt, die auf der Hauptoberfläche des zweiten piezoelektrischen Substrats (4) gebildet ist, wobei der Vibrator (2) in dem Rahmen (17) angeordnet ist, so daß die gemeinsame Elektrode (7) im wesentlichen parallel zu jeweiligen nach außen gerichteten Oberflächen der gegenüberliegenden Seite des Rahmens (17) ist; und
einen ersten und einen zweiten Tragestift (8; 20; 22; 24; 26; 30) zum Tragen des Vibrators, wobei der erste und der zweite Tragestift (; 20; 22; 24; 26; 30) im wesentlichen parallel zu der gemeinsamen Elektrode (7) angeordnet sind, und jeder jeweilige erste Abschnitte, die mit der gemeinsamen Elektrode (7) verbunden sind, und jeweilige zweite gebogene Abschnitte aufweist, die sich in entgegengesetzten Richtungen von dem ersten Abschnitt erstrecken und mit jeweiligen der gegenüberliegenden Seiten des Rahmens (17) verbunden sind.

3. Ein Vibrationsgyroskop (1) gemäß Anspruch 2, bei dem die Trageeinrichtung (8; 20; 22; 24; 26) zwei Tragebauglieder umfaßt, von denen jedes in der Form eines einzelnen Drahtstabs ist, der aus dem ersten und dem zweiten Abschnitt besteht.

4. Ein Vibrationsgyroskop (1) gemäß Anspruch 2, bei dem der gebogene Abschnitt jedes zweiten Abschnitts eine im wesentlichen rechtwinklige Biegung bildet.

5. Ein Vibrationsgyroskop (1) gemäß Anspruch 2, bei dem der gebogene Abschnitt jedes zweiten Abschnitts im wesentlichen eine Spitzwinkelbiegung bildet.

6. Ein Vibrationsgyroskop (1) gemäß Anspruch 2, bei dem der gebogene Abschnitt im wesentlichen eine gekrümmte Biegung bildet.

7. Ein Vibrationsgyroskop (1) gemäß Anspruch 2, bei dem die zweiten Abschnitte jeweils mit einer Mehrzahl von gebogenen Abschnitten versehen sind, von denen jeder eine im wesentlichen rechtwinkelige Biegung bildet.

8. Ein Vibrationsgyroskop (1) gemäß Anspruch 2, bei dem die zweiten Abschnitte in einer spulenartigen Form gebogen sind.

## Revendications

1. Un gyroscope vibrant (1) comprenant :
un vibrateur (2) comprenant un premier substrat piézo-électrique (3) polarisé dans la direction de l'épaisseur dudit substrat, un deuxième substrat piézo-électrique (4) disposé en couche sur ledit premier substrat piézo-électrique (3) et polarisé dans la direction opposée à la direction dans laquelle ledit premier substrat piézo-électrique (3) est polarisé, deux électrodes divisées (6) formées sur la surface principale dudit premier substrat piézo-électrique (3) et une électrode commune (7) formée sur la surface principale dudit deuxième substrat piézo-électrique (4); et
un moyen de support (30) pour supporter ledit vibrateur (2), ledit moyen de support (30) comprenant au moins un premier élément de support ayant une première partie qui est fixée à ladite électrode commune (7) et un deuxième élément de support ayant une première partie qui est fixée à ladite électrode commune (7),
**caractérisé en ce que**
ledit premier élément de support comprend une deuxième partie s'étendant à partir de ladite première partie et ayant au moins une partie coudée;
ledit deuxième élément de support comprend une deuxième partie qui est coudée et s'étend à partir de ladite première partie; et
ledit moyen de support (30) comprend de plus des parties d'interconnexion (32) interconnectant les deuxièmes parties respectives desdits premier et deuxième éléments de support.

2. Gyroscope vibrant (1) comprenant :
un cadre (17);
un vibrateur (2) disposé à l'intérieur dudit cadre (17), ledit vibrateur (2) comprenant un premier substrat piézo-électrique (3) polarisé dans la direction de l'épaisseur dudit substrat (3), un deuxième substrat piézo-électrique (4) disposé en couche sur ledit premier substrat piézo-électrique (4) et polarisé dans une direction opposée à la direction dans laquelle ledit premier substrat piézo-électrique (3) est polarisé, deux électrodes divisées (6) formées sur la surface principale dudit premier substrat piézo-électrique (3) et une électrode commune (7) formée sur la surface principale dudit deuxième substrat piézo-électrique (4), ledit vibrateur (2) étant disposé à l'intérieur dudit cadre (17) de telle façon que ladite électrode commune (7) soit essentiellement parallèle à des surfaces respectives orientées vers l'extérieur du côté opposé dudit cadre (17); et
des première et deuxième broches de support (8; 20; 22; 24; 26; 30) pour supporter ledit vibrateur, chacune desdites première et deuxième broches de support (8; 20; 22; 24; 26; 30) étant disposée essentiellement parallèlement à ladite électrode commune (7) et ayant chacune des premières parties respectives connectées à ladite électrode commune (7) et des deuxièmes parties coudées respectives s'étendant dans des directions opposées à partir de ladite première partie et connectées à des côtés respectifs desdits côtés opposés dudit cadre (17).

3. Gyroscope vibrant (1) selon la revendication 2, dans lequel ledit moyen de support (8; 20; 22; 24; 26) comprend deux éléments de support, chacun des deux étant réalisé sous la forme d'un fil rond individuel formé desdites première et deuxième parties.

4. Gyroscope vibrant (1) selon la revendication 2, dans lequel ladite partie coudée de chaque deuxième partie forme un coude sensiblement à angle droit.

5. Gyroscope vibrant (1) selon la revendication 2, dans lequel ladite partie coudée de chaque deuxième partie forme un coude sensiblement à angle aigu.

6. Gyroscope vibrant (1) selon la revendication 2, dans lequel ladite partie coudée forme essentiellement un coude incurvé.

7. Gyroscope vibrant (1) selon la revendication 2, dans lequel lesdites deuxièmes parties sont pourvues chacune d'une pluralité de parties coudées dont chacune forme un coude sensiblement à angle droit.

8. Gyroscope vibrant (1) selon la revendication 2, dans lequel lesdites deuxièmes parties sont coudées en une forme semblable à la forme hélicoïdale.
